# EUROPEAN PATENT SPECIFICATION

(11) **EP 3 728 114 B1**
(45) Date of publication and mention of the grant of the patent: **20.03.2024**
(21) Application number: 18782921.3
(22) Date of filing: 28.09.2018
(51) Int. Cl.: C01B 25/237, B01D 15/00, B01J 20/20, B01J 20/30, B01J 20/32, C02F 1/72, C02F 1/76, B01J 20/34

(54) **PROCESS FOR THE REMOVAL OF HEAVY METALS FROM LIQUIDS**
VERFAHREN ZUR ENTFERNUNG VON SCHWERMETALLEN AUS FLÜSSIGKEITEN
PROCÉDÉ D'ÉLIMINATION DE MÉTAUX LOURDS DE LIQUIDES

(30) Priority: 29.09.2017 LU 100464
(43) Date of publication of application: 28.10.2020
(73) Proprietor: CPPE Carbon Process & Plant Engineering S.A., 4802 Rodange (LU)
(72) Inventor: STRICKROTH, Alain, 4408 Belvaux (LU)
(74) Representative: Office Freylinger
(86) International application number: PCT/EP2018/076407
(87) International publication number: WO 2019/063765

(56) References cited:
- EP-A1- 1 172 331
- EP-A2- 0 333 489
- WO-A1-2017/174365
- JP-A- 2003 292 305
- US-A- 3 978 196
- N. Abdennebi ET AL: "Removal of aluminium and iron ions from phosphoric acid by precipitation of organo-metallic complex using organophosphorous reagent", Journal of materials and Environmental Sciences, vol. 8, no. 2 1 January 2017 (2017-01-01), pages 557-565, XP055475147, Retrieved from the Internet: URL:http://www.jmaterenvironsci.com/Docume nt/vol8/vol8_N2/60-JMES-2614-Abdennabi.pdf [retrieved on 2018-05-15]

## Description

### Technical field

The present invention generally relates to the removal of heavy metals from liquids and relates in particular to a process for the removal of heavy metals from liquids in a fixed bed reactor.

### Background Art

Activated carbon (activated carbon or activated carbons) are widely used for different applications including heavy metal removals from gas and liquids. It has been found however that the performance of the activated carbon could still be enhanced.

US 7,722,843 discloses a process for the removal of mercury from a combustion exhaust gas stream in a combustion exhaust gas purification scheme that includes a combustion exhaust scrubber system that uses an aqueous liquid to remove acid gases from the combustion exhaust gas. The process comprises providing a powdered mercury sorbent, introducing the powdered mercury sorbent into the aqueous liquid in the scrubber system, and after introduction of the mercury sorbent into the aqueous liquid, separating at least some of the mercury sorbent from the aqueous liquid.

EP 0333489 A2, EP 1172331 A1 and N. Abdennebi et al., "Removal of aluminium and iron ions from phosphoric acid by precipitation of organo-metallic complex using organophosphorous reagent", JMES, 8(2), also disclose different methods of removal of heavy metals from phosphoric acid solutions using different sorbent compositions.

### Technical problem

It is an object of the present invention to provide an activated carbon composition having an improved activity as well as a more efficient process for the removal of heavy metals from a liquid.

This object is achieved by a process for the removal of heavy metals from a liquid comprising heavy metals as claimed in claim 1.

### General Description of the Invention

The object of the invention is achieved by a process for the removal of heavy metals from a liquid comprising phosphoric acid and heavy metals, wherein hydrochloric acid is added to the liquid, wherein the liquid and the hydrochloric acid are brought in contact with a mixture comprising between 30 %vol. and 60 %vol. of an activated carbon impregnated with sulfur, between 30 %vol. and 60 %vol. of an activated carbon impregnated with iron and between 5 %vol. and 40 %vol. of a filler material, the total of these three ingredients being 100%vol., leaving the liquid in contact with the mixture, absorption of the heavy metals onto the mixture to obtain a liquid with a depleted level of heavy metals, evacuation of the liquid with a depleted level of heavy metals from the mixture.

Surprisingly it has been found that the process for removal of heavy metals from a liquid is more efficient if a mixture of an activated carbon impregnated with sulfur and of an activated carbon impregnated with iron and of a filler material is used. It has also been found that the activity is more easily regenerated if between 5 and 40 %vol. of a filler material is used. As a demonstration example of this, a Kombisorbon^{®} unit (using an activated carbon alone (i.e. without a filler material) is regenerated periodically (2-4 times a year) on an industrial site. The drying time period after this regeneration period is reduced by more than 40 % (28 instead of 48 hours) in case of a reactor bed with an activated carbon (80 %) / filler material (20 %) mixture compared to activated carbon alone.

Surprisingly, it has been found that the removal of heavy metals from a liquid is even more efficient if hydrochloric acid is added to the liquid before it is put in contact with the mixture consisting of between 30 %vol. and 60 %vol. of an activated carbon impregnated with sulfur, between 30 %vol. and 60 %vol. of an activated carbon impregnated with iron and between 5 %vol. and 40 %vol. of a filler material.

The hydrochloric acid is added preferably under the form of an aqueous solution. The concentration of hydrochloric acid in this solution is preferably between 5 % and 38 % w/w.

Preferably between 15 ml/l to 60 ml/l liquid of hydrochloric acid solution are added.

The concentration of hydrochloric acid in the liquid is preferably between 1 and 10% w/w.

The liquid is preferably an aqueous liquid.

The liquid comprises preferably phosphoric acid. The concentration of phosphoric acid in the liquid is between preferably 10 w% and 90 w%; more preferably between 20% and 55% w/w. The concentration of hydrochloric acid in the liquid is preferably between 1/40 and 1/20 of the phosphoric acid in the liquid.

In general, the usual initial concentration of phosphoric acid solution is between 10 w% and 90 w%; whereas the final concentration (after addition of hydrochloric acid solution) of phosphoric acid solution is between 9 w% and 85 w% depending on the added volume of hydrochloric acid solution.

It has been found that this process is particularly well suited for the removal of heavy metals from phosphoric acid that is obtained during the production of fertilizers. Indeed, phosphate rock (PR) is used as a raw material in the manufacture of most commercial phosphate fertilizers on the market. A weak phosphoric acid (40-55%) is produced from the reaction of PR with sulfuric acid, using a wet process. The obtained phosphoric acid is then used in the production of a series of liquid or solid fertilizers. During the reaction of PR with sulfuric acid, heavy metals contained in the PR are dissolved and end up in the phosphoric acid.

It can also be used for the removal of heavy metals from industrial waste water from the cement industry, from petroleum refining, from chemical manufacturing, from metal finishing, from printed circuit manufacturing, from oil and gas extraction and from hazardous wastes.

The term heavy metal refers to any metallic chemical element that has a relatively high density and is toxic or poisonous at low concentrations. Examples of heavy metals include mercury (Hg), cadmium (Cd), arsenic (As), chromium (Cr), thallium (Tl), and lead (Pb). A toxic heavy metal is any relatively dense metal or metalloid that is noted for its potential toxicity, especially in environmental contexts. The term has particular application to cadmium, mercury, lead and arsenic, all of which appear in the World Health Organisation's list of 10 chemicals of major public concern. Other examples include manganese (Mn), cobalt (Co), nickel (Ni), copper (Cu), zinc (Zn), selenium (Se), silver (Ag) and antimony (Sb).

According to various embodiments, the mixture comprises at least 30 %vol., 31%vol., 32%vol., 33%vol., 34%vol., 35%vol., 36%vol., 37%vol., 38%vol., 39%vol., 40%vol., 41%vol., 42%vol., 43%vol., 44%vol., 45%vol., 46%vol., 47%vol., 48%vol., 49%vol., 50%vol., 51%vol., 52%vol., 53%vol., 54%vol., 55%vol., 56%vol., 57%vol., 58%vol. or 59%vol. of an activated carbon impregnated with sulfur.

According to various embodiments, the mixture comprises at most 60%vol., 59%vol., 58%vol., 57%vol., 56%vol., 55%vol., 54%vol., 53%vol., 52%vol., 51%vol., 50%vol., 49%vol., 48%vol., 47%vol., 46%vol., 45%vol., 44%vol., 43%vol., 42%vol., 41%vol., 40%vol., 39%vol., 38%vol., 37%vol., 36%vol., 35%vol., 34%vol., 33%vol., 32%vol., or 31%vol., of an activated carbon impregnated with sulfur.

In a preferred embodiment, the mixture comprises between 40 %vol. and 50 %vol. of activated carbon impregnated with sulfur.

Preferably, the activated carbon impregnated with sulfur comprises between 5 %weight and 20 %weight of sulfur.

According to various embodiments, the mixture comprises at least 30%vol., 31%vol., 32%vol., 33%vol., 34%vol., 35%vol., 36%vol., 37%vol., 38%vol., 39%vol., 40%vol., 41%vol., 42%vol., 43%vol., 44%vol., 45%vol., 46%vol., 47%vol., 48%vol., 49%vol., 50%vol., 51%vol., 52%vol., 53%vol., 54%vol., 55%vol., 56 %vol., 57%vol., 58%vol. or 59%vol. of an activated carbon impregnated with iron.

According to various embodiments, the mixture comprises at most 60%vol., 59%vol., 58%vol., 57%vol., 56%vol., 55%vol., 54%vol., 53%vol., 52%vol., 51%vol., 50%vol., 49%vol., 48%vol., 47%vol., 46%vol., 45%vol., 44%vol., 43%vol., 42%vol., 41%vol., 40%vol., 39%vol., 38%vol., 37%vol., 36%vol., 35%vol., 34%vol., 33%vol., 32%vol., or 31%vol. of an activated carbon impregnated with iron.

In a preferred embodiment, the mixture comprises between 40 %vol. and 50 %vol. of activated carbon impregnated with iron.

Preferably, the activated carbon impregnated with iron comprises between 10 %weight and 30 %weight of iron.

The activated carbon is preferably extruded and has a grain size of 0.80 - 130 mm. The activated carbon is preferably granulated and has a grain size: 0.30 to 4.75mm. The activated carbon is thus not under powder form.

In an embodiment the activated carbon is preferably a mixture of granulated and extruded catalyst.

The carbon may be produced from brown and bituminous coals, fruit pits, coconut shells, lignite, peat, wood, sawdust / saw chip, petroleum coke, bone and paper mill waste (lignin), synthetic polymers like PVC, rayon, viscose, polyacrylonitrile or phenols.

The carbon may be activated by :
- a physical treatment: heat, steam, oxygen, CO₂, air
- a chemical treatment: impregnation with acid, strong base or salts (e.g. sulfuric, chlorhydric or phosphoric acid, potassium or sodium hydroxide, calcium or zinc chloride)
- a combination of both a physical and a chemical treatment.

The activated carbon may have a specific surface area (BET) from 400 to 1800 m²/g and an acid or alkaline pH.

According to various embodiments, the mixture comprises at least 5%vol., 6%vol., 7%vol., 8%vol., 9%vol., 10%vol., 11%vol., 12%vol., 13%vol., 14%vol., 15%vol., 16%vol., 17%vol., 18%vol., 19%vol., 20%vol., 21%vol., 22%vol., 23%vol., 24%vol., 25%vol., 26%vol., 27%vol., 28%vol., 29%vol., 30 %vol., 31%vol., 32%vol., 33%vol., 34%vol., 35%vol., 36%vol., 37%vol., 38%vol. or 39%vol., of filler material.

According to various embodiments, the mixture comprises at most 40%vol., 39%vol., 38%vol., 37%vol., 36%vol., 35%vol., 34%vol., 33%vol., 32%vol., 31%vol., 30%vol., 29%vol., 28%vol., 27%vol., 26%vol., 25%vol., 24%vol., 23%vol., 22%vol., 21%vol., 20%vol., 19%vol., 18%vol., 17%vol., 16%vol., 15%vol., 14%vol., 13%vol., 12%vol., 11%vol., 10%vol., 9%vol., 8%vol., 7%vol. or 6%vol. of filler material.

In a preferred embodiment, the filler materials are present in an amount from 5 to 15 %vol.

Preferably, the filler material comprises plastic, metals, alumina, ceramic materials or mixture thereof.

According to various embodiments, the filler material is a shape chosen among saddle shaped, ring shaped, ball shaped, torus shaped, prism shaped or irregular shaped.

In particular, filler materials made of ceramic material, having a free volume (i.e. the volume that is not occupied by the ceramic material) of 50-79% may be used:
i. Novalox^{®} Saddle : 12.7-76.2 mm
ii. Berl saddle : 4-50 mm
iii. Cylindrical ring : 5-200 mm
iv. Pall^{®} ring : 25-100 mm
v. Transitional grid lining
vi. Cylindrical ring with 1 bar or 1 cross : 80-200 mm
vii. Grid block : 215*145*90 mm

In particular, filler materials made of metal, having a free volume of 95-98% may be used:
i. Cylindrical ring . 15-50 mm
ii. Pall^{®} ring : 15-90 mm
iii. VSP^{®} : 25-50 mm
iv. Top-Pak^{®} : 15 mm
v. Novalox^{®}-M : 15-70 mm
vi. Twin-Pak^{®} : 10-15 mm
vii. Interpak^{®} : 10-20 mm

In particular, filler materials made of plastic, having a free volume of 87-97% may be used:
i. Novalox^{®} saddle : 12.7 - 50.8 mm
ii. Pall^{®} ring : 15-90 mm
iii. VSP^{®} : 25-90 mm
iv. Igel^{®} : 40 mm
v. Netball^{®} : 45-90 mm

The filler material is thus made up of distinct, individual particles that are added to the activated carbon to improve, to enhance some properties of the mixtured material. The filler material particles generally have a mean particle size (based on the average largest dimension (by number) of the particle) of more than 4 mm. Usually their mean particle size (based on the average largest dimension (by number) of the particle) is less than 200 mm.

In an embodiment, the mixture of activated carbon impregnated with sulfur, activated carbon impregnated with iron and a filler material contains no other solid ingredients than the activated carbon and the filler material. The total of these three ingredients makes thus 100%vol. of the mixture. It goes without saying that the mixture is a heterogeneous mixture since the components have a different particles sizes, different densities etc. The mixture comprises preferably a mixture of separate, distinct particles of filler and separate, distinct particles of activated carbon catalyst. This makes it easy to separate the activated carbon from the filler when the activated carbon needs to be replaced.

Preferably, the liquid is left in contact with the composition for at least 1h, 2h, 3h or 10h. Preferably, the liquid is left in contact with the composition for less than 20h, 15h, 12h or 10h.

According to various embodiments, the liquid comprises at least 50 mg/l of heavy metals, preferably at least 45 mg/l, more preferably at least 40 mg/l of heavy metals.

### Description of Preferred Embodiments

Further details and advantages of the present invention will be apparent from the following detailed description of several not limiting embodiments.

The presence of filler allowed a more efficient washing of the activated carbon with sulfates removal coming from the reaction between SOx and NOx with water vapors from inlet flue gas.

The presence of filler allowed a quicker drying step after regeneration with water flow.

Test 1 - Removal from Liquid - Laboratory scale - single pass (with filler and with HCl)

500 cm³ of a mixture of 45 % of activated carbon impregnated with sulfur, 45 % of activated carbon impregnated with iron supplied from Watch-Water, and 10 % of a plastic filler material was used during this test.

Prior to starting the test, a hydrochloric acid solution at 25 w% was added in a proportion corresponding to one thirtieth of the volume of the phosphoric acid solution with a concentration of 50 w%. After addition, the final concentration of phosphoric acid solution is 48 w%. The level of heavy metals in a phosphoric acid solution was reduced significantly. 90 % removal for cadmium and mercury and 75 % removal for arsenic. The initial concentrations were 39 ppm for cadmium, 0.1 ppm for mercury and 23 ppm for arsenic.

The presence of filler material allowed less clogging from silica coming from the phosphoric acid media inside the activated carbon bed.

The presence of filler material allowed a more efficient washing of the activated carbon with easier silica removal.

The presence of hydrochloric acid increased the removal efficiency of heavy metals.

Test 2b - Comparative Example: Removal from Liquid - Laboratory scale - single pass (with filler no HCl)

The same materials and conditions were used except that no hydrochloric acid was added.

The level of heavy metals in a phosphoric acid solution was reduced: 75 % removal for cadmium and mercury and 65 % removal for arsenic.

The addition of hydrochloric acid to the liquid containing heavy metals allows thus to increase the removal of heavy metals: 90% removal (instead of 75 % removal) for cadmium and mercury and 75 % removal (instead of 65 % removal) for arsenic.

### Test 2c - Comparative example - Removal from Liquid - Laboratory scale - single pass (impregnated catalyst, no filler and no HCl)

500 cm³ of 100 % of activated carbon impregnated with sulfur supplied from Jacobi Carbons was used during this test.

The level of heavy metals in a phosphoric acid solution (As: 23 ppm, Hg: 0.1 ppm and Cd: 39 ppm) was reduced. Only a 20 % removal rate for cadmium and mercury and only 35 % removal rate for arsenic were achieved.

### Test 2d - Comparative example - Removal from Liquid - Laboratory scale - single pass (impregnated catalyst, no filler and no HCl)

500 cm³ of 100 % of activated carbon impregnated with iron supplied from Watch-Water was used during this test.

The level of heavy metals in a phosphoric acid solution (As: 23 ppm, Hg: 0.1 ppm and Cd: 39 ppm) was reduced. Only a 50 % removal rate for cadmium and mercury and only a 15 % removal rate for arsenic were achieved.

Test 2e - Removal from Liquid - Laboratory scale - single pass (no filler and no HCl)

500 cm³ of an aqueous phosphoric acid solution having initial concentrations of 39 ppm for cadmium, 0.1 ppm for mercury and 23 ppm for arsenic.: 30 % of activated carbon impregnated with sulfur supplied from Jacobi Carbons, 30 % of activated carbon impregnated with iron supplied from Watch-Water, 40 % of a plastic filler material was used during this test.

The level of heavy metals in a phosphoric acid solution was reduced significantly. 20 % removal rate for cadmium and mercury and 35 % removal rate for arsenic.

The experiments described have been carried out with a solution of phosphoric acid of 50 w%.

The activated carbon used in the tests above had a specific high catalytic surface area (BET at least 700 m²/g) with impregnation (like Br, Cu, Fe, S, OH ...).

The activated carbon was mixed with various types of filler materials of different shapes (cylinder, balls, "Sattelkörper", ...) and different material (plastic, alumina, ceramic, ..) in various ratios (1/5; 1/3; 1/10; ...). Different suppliers of activated carbon for companies like Jacobi, Cabot Carbon, Chemviron, Desotec, Carbotech and ATEC were tested.

It was found that the removal of heavy metals from an aqueous solution was increased significantly when the activated carbon was mixed with filler material as described above.

It was further found that the removal of heavy metals from an aqueous solution was increased even more when the activated carbon was mixed with filler material and when hydrochloric acid was added to the liquid before it was put in contact with the mixture of and the filler materials as described above.

It must be noted that the active carbon do not contain:
a. any iodine, bromine or a compound thereof,
b. any water repellent,
c. any catalytically active metals such as Platinum, Palladium, Rhodium etc. or,
d. any organic/ catalytically active metal complexes based on metals such as Platinum, Palladium, Rhodium etc.

The active carbon is not hydrophobized by means of hydrophobic polymer compounds such as polytetrafluoroethylene, polyisobutylene, polyethylene, polypropylene or polytrichlorfluorethylen.

## Claims

1. A process for the removal of heavy metals from a liquid comprising phosphoric acid and heavy metals, wherein hydrochloric acid is added to the liquid, wherein the liquid and the hydrochloric acid are brought in contact in a fixed-bed adsorber with a mixture consisting of between 30 %vol. and 60 %vol. of an activated carbon impregnated with sulfur, between 30 %vol. and 60 %vol. of an activated carbon impregnated with iron and between 5 %vol. and 40 %vol. of a filler material, leaving the liquid in contact with the mixture, absorption of the heavy metals onto the mixture to obtain a liquid with a depleted level of heavy metals, evacuation of the liquid with a depleted level of heavy metals from the mixture.

2. The process as claimed in claim 1, wherein the hydrochloric acid is added as a solution.

3. The process as claimed in claim 2, wherein the concentration of hydrochloric acid in the solution is between 5 % and 38 % w/w.

4. The process as claimed in claim 2, wherein the concentration of hydrochloric acid in the liquid is between 1 and 10% w/w.

5. The process as claimed in any of the claims 1 to 4, wherein the concentration of phosphoric acid in the liquid is between 20% and 55% w/w.

6. The process as claimed in claim 4 or 5, wherein the concentration of hydrochloric acid in the liquid is between 1/40 and 1/20 of the phosphoric acid in the liquid.

7. The process as claimed in any one of the preceding claims, wherein the liquid comprises at least 40 mg/l of heavy metals.

8. The process as claimed in any one of the preceding claims, wherein the mixture comprises between 40 %vol. and 50 %vol. of activated carbon impregnated with sulfur.

9. The process as claimed in any one of the preceding claims, wherein the activated carbon impregnated with sulfur comprises between 5 %weight and 20 %weight of sulfur

10. The process as claimed in any one of the preceding claims, wherein the mixture comprises between 40 %vol. and 50 %vol. of activated carbon impregnated with iron.

11. The process as claimed in any one of the preceding claims, wherein the activated carbon impregnated with iron comprises between 10 %weight and 30 %weight of iron

12. The process as claimed in any one of the preceding claims, wherein the filler material comprises plastic, alumina or ceramic materials or mixtures thereof.

13. The process as claimed in any one of the preceding claims, wherein the filler material comprises a free volume of 50% vol and 97 % vol.

14. The process as claimed in any one of the preceding claims, wherein the filler materials are present in an amount from 5 to 15 %vol and wherein the filler material is a shape chosen among saddle shaped, ring shaped, ball shaped, torus shaped, prism shaped or irregular shaped.

## Patentansprüche

1. Verfahren zur Entfernung von Schwermetallen aus einer Flüssigkeit, die Phosphorsäure und Schwermetalle umfasst, wobei Salzsäure der Flüssigkeit zugegeben wird, wobei die Flüssigkeit und die Salzsäure in einem Festbettadsorber mit einem Gemisch in Kontakt gebracht werden, das aus zwischen 30 Vol.-% und 60 Vol.-% einer Aktivkohle, die mit Schwefel imprägniert ist, zwischen 30 Vol.-% und 60 Vol.-% einer Aktivkohle, die mit Eisen imprägniert ist, und zwischen 5 Vol.-% und 40 Vol.-% eines Füllstoffmaterials besteht, Belassen der Flüssigkeit in Kontakt mit dem Gemisch, Adsorbieren der Schwermetalle auf dem Gemisch, um eine Flüssigkeit mit einer verminderten Konzentration von Schwermetallen zu erhalten, Abführen der Flüssigkeit mit einer verminderten Konzentration von Schwermetallen aus dem Gemisch.

2. Verfahren nach Anspruch 1, wobei die Salzsäure als eine Lösung zugegeben wird.

3. Verfahren nach Anspruch 2, wobei die Konzentration von Salzsäure in der Lösung zwischen 5 Gew.-% und 38 Gew.-% liegt.

4. Verfahren nach Anspruch 2, wobei die Konzentration von Salzsäure in der Flüssigkeit zwischen 1 Gew.-% und 10 Gew.-% liegt.

5. Verfahren nach einem der Ansprüche 1 bis 4, wobei die Konzentration von Phosphorsäure in der Flüssigkeit zwischen 20 Gew.-% und 55 Gew.-% liegt.

6. Verfahren nach Anspruch 4 oder 5, wobei die Konzentration von Salzsäure in der Flüssigkeit zwischen 1:40 und 1:20 der Phosphorsäure in der Flüssigkeit liegt.

7. Verfahren nach einem der vorhergehenden Ansprüche, wobei die Flüssigkeit mindestens 40 mg/l Schwermetalle umfasst.

8. Verfahren nach einem der vorhergehenden Ansprüche, wobei das Gemisch zwischen 40 Vol.-% und 50 Vol.-% Aktivkohle, die mit Schwefel imprägniert ist, umfasst.

9. Verfahren nach einem der vorhergehenden Ansprüche, wobei die Aktivkohle, die mit Schwefel imprägniert ist, zwischen 5 Gew.-% und 20 Gew.-% Schwefel umfasst.

10. Verfahren nach einem der vorhergehenden Ansprüche, wobei das Gemisch zwischen 40 Vol.-% und 50 Vol.-% Aktivkohle, die mit Eisen imprägniert ist, umfasst.

11. Verfahren nach einem der vorhergehenden Ansprüche, wobei die Aktivkohle, die mit Eisen imprägniert ist, zwischen 10 Gew.-% und 30 Gew.-% Eisen umfasst.

12. Verfahren nach einem der vorhergehenden Ansprüche, wobei das Füllstoffmaterial Kunststoff, Aluminiumoxid oder Keramikmaterialien oder Gemische davon umfasst.

13. Verfahren nach einem der vorhergehenden Ansprüche, wobei das Füllstoffmaterial ein freies Volumen von 50 Vol.-% und 97 Vol.-% umfasst.

14. Verfahren nach einem der vorhergehenden Ansprüche, wobei die Füllstoffmaterialien in einer Menge von 5 bis 15 Vol.-% vorliegen und wobei das Füllstoffmaterial eine Form ist, die aus sattelförmig, ringförmig, kugelförmig, torusförmig, prismenförmig oder einer unregelmäßigen Form ausgewählt ist.

## Revendications

1. Procédé pour l'élimination de métaux lourds à partir d'un liquide comprenant de l'acide phosphorique et des métaux lourds, dans lequel de l'acide chlorhydrique est ajouté au liquide, dans lequel le liquide et l'acide chlorhydrique sont amenés en contact dans un adsorbeur à lit fixe avec un mélange constituant entre 30 % en volume et 60 % en volume de charbon activé, imprégné avec du soufre, entre 30 % en volume et 60 % en volume de charbon activé, imprégné avec du fer, et entre 5 % en volume et 40 % en volume d'une matière de charge, le liquide est maintenu en contact avec le mélange, les métaux lourds sont adsorbés sur le mélange pour obtenir un liquide possédant une teneur appauvrie en métaux lourds, le liquide est évacué du mélange avec une teneur appauvrie en métaux lourds.

2. Procédé selon la revendication 1, dans lequel l'acide chlorhydrique est ajouté sous la forme d'une solution.

3. Procédé selon la revendication 2, dans lequel la concentration de l'acide chlorhydrique dans la solution se situe entre 5 % et 38 % en poids/poids.

4. Procédé selon la revendication 2, dans lequel la concentration de l'acide chlorhydrique dans le liquide se situe entre 1 % et 10 % en poids/poids.

5. Procédé selon l'une quelconque des revendications 1 à 4, dans lequel la concentration de l'acide phosphorique dans le liquide se situe entre 20 % et 55 % en poids/poids.

6. Procédé selon la revendication 4 ou 5, dans lequel la concentration de l'acide chlorhydrique dans le liquide se situe entre 1/40 et 1/20 de l'acide phosphorique dans le liquide.

7. Procédé selon l'une quelconque des revendications précédentes, dans lequel le liquide comprend au moins 40 mg/litre de métaux lourds.

8. Procédé selon l'une quelconque des revendications précédentes, dans lequel le mélange comprend entre 40 % en volume et 50 % en volume de charbon activé, imprégné avec du soufre.

9. Procédé selon l'une quelconque des revendications précédentes, dans lequel le charbon activé, imprégné avec du soufre, comprend entre 5 % en poids du 20 % en poids de soufre.

10. Procédé selon l'une quelconque des revendications précédentes, dans lequel le mélange comprend entre 40 % en volume et 50 % en volume de charbon activé, imprégné avec du fer.

11. Procédé selon l'une quelconque des revendications précédentes, dans lequel le charbon activé, imprégné avec du fer, comprend entre 10 % en poids et 30 % en poids de fer.

12. Procédé selon l'une quelconque des revendications précédentes, dans lequel la matière de charge comprend une matière plastique, une matière à base d'alumine ou une matière céramique ou encore leurs mélanges.

13. Procédé selon l'une quelconque des revendications précédentes, dans lequel la matière de charge comprend un volume libre de 50 % en volume et de 97 % en volume.

14. Procédé selon l'une quelconque des revendications précédentes, dans lequel les matières de charge sont présentes en une quantité de 5 à 15 % en volume et dans lequel la matière de charge possède une configuration choisie parmi une configuration en forme de selle, une configuration de forme annulaire, une configuration en forme de bille, une configuration de forme torique, une configuration en forme de prisme ou une configuration de forme irrégulière.
